# EUROPEAN PATENT APPLICATION

(11) **EP 4 668 801 A1**
(43) Date of publication of application: **24.12.2025**
(21) Application number: 23921790.4
(22) Date of filing: 15.02.2023
(51) Int. Cl.: H04W 8/14

(54) **INFORMATION REPORTING METHODS AND APPARATUSES, AND MEDIUM AND COMMUNICATION SYSTEM**

(71) Applicant: Beijing Xiaomi Mobile Software Co., Ltd., Beijing 100085 (CN)
(72) Inventor: LIU, Xiaofei, Beijing 100085 (CN)
(74) Representative: Dehns Germany Partnerschaft mbB
(86) International application number: PCT/CN2023/076288
(87) International publication number: WO 2024/168627

(57) **Abstract**

The present disclosure relates to information reporting methods and apparatuses, and a medium and a communication system. An information reporting method comprises : sending to a first node first identification information and a report, which is related to a second node, wherein the first identification information is independent of the report, and the first identification information is used for instructing the first node to send the report to the second node. A first node can send a report to a second node on the basis of first identification information without decoding the report, thereby avoiding the situation where the first node cannot decode a related report and thus cannot send the related report to a correct second node when the first node or the second node has changed and the related report is not immediately reported, such that the aim of optimizing the network quality of a terminal device on the basis of a report can be realized.

## Description

### TECHNICAL FIELD

The present disclosure relates to the field of communication technology, and in particular to information reporting method and device, a medium and a communication system.

### BACKGROUND

In the relevant technology of the terminal device supporting dual connectivity, when the terminal device is respectively connected to one node as a master node and the other node as a secondary node, since there is a node that cannot decode the relevant report of another node that uses another RAT (radio access technology), if any one of the two nodes changes and the relevant report of the other node is not reported immediately, it will cause a certain node to be unable to decode the relevant report and thus unable to send the relevant report to the correct other node, thereby making it impossible to optimize the network quality of the terminal device.

### SUMMARY

In order to overcome the problems existing in the related art, the present disclosure provides information reporting method and device, a medium and a communication system.

According to a first aspect of the embodiments of the present disclosure, there is provided an information reporting method, performed by a terminal device in a dual-connectivity scenario, including:
sending first identification information and a report related to a second node to a first node, where the first identification information is independent of the report, and the first identification information is configured to instruct the first node to send the report to the second node.

According to a second aspect of the embodiments of the present disclosure, there is provided an information reporting method, performed by a first node, including:
receiving first identification information and a report related to a second node, where the first identification information is independent of the report; and
sending the report to the second node based on the first identification information.

According to a third aspect of the embodiments of the present disclosure, there is provided an information reporting device, including:
a first sending module, configured to send first identification information and a report related to a second node to a first node, where the first identification information is independent of the report, and the first identification information is configured to instruct the first node to send the report to the second node.

According to a fourth aspect of the embodiments of the present disclosure, there is provided an information reporting device, including:
a first receiving module, configured to receive first identification information and a report related to a second node, where the first identification information is independent of the report; and
a second sending module, configured to send the report to the second node based on the first identification information.

According to a fifth aspect of the embodiments of the present disclosure, there is provided an information reporting device, including:
a processor; and
a memory for storing processor executable instructions;
where the processor is configured to execute steps of the method according to the first aspect, or steps of the method according to the second aspect.

According to a sixth aspect of the embodiments of the present disclosure, there is provided a computer-readable storage medium with computer program instructions stored thereon, when the computer program instructions are executed by the processor, steps of the method according to the first aspect, or steps of the method according to the second aspect, are implemented.

According to a seventh aspect of the embodiments of the present disclosure, there is provided a communication system, including:
a terminal device, configured to execute the method according to the first aspect;
a first node, configured to execute the method according to the second aspect; and
a second node.

Through the above scheme, the first identification information and the report related to the second node are sent to the first node. The first identification information is configured to instruct the first node to send the report to the second node. Since the first identification information is sent independently of the report, for the first node, the first node does not need to decode the report and can send the report to the second node based on the first identification information. This avoids the situation where the first node cannot decode the relevant report and thus cannot send the relevant report to the correct second node in a case where the first node or the second node changes and the relevant report is not reported immediately. This can achieve the purpose of optimizing the network quality of the terminal device based on the report.

### BRIEF DESCRIPTION OF THE DRAWINGS

The drawings herein are incorporated into the specification and constitute a part of the specification, illustrate embodiments consistent with the present disclosure, and are used together with the specification to explain the principles of the present disclosure.
FIG. 1 is a schematic diagram of an architecture of a communication system according to an example embodiment.
FIG. 2 is a flowchart of an information reporting method according to an example embodiment.
FIG. 3 is a flowchart of an information reporting method according to an example embodiment.
FIG. 4 is a flowchart of an information reporting method according to an example embodiment.
FIG. 5 is a flowchart of an information reporting method according to an example embodiment.
FIG. 6 is a flowchart of an information reporting method according to an example embodiment.
FIG. 7 is a flowchart of an information reporting method according to an example embodiment.
FIG. 8 is a flowchart of an information reporting method according to an example embodiment.
FIG. 9 is a flowchart of an information reporting method according to an example embodiment.
FIG. 10 is a flowchart of an information reporting method according to an example embodiment.
FIG. 11 is a flowchart of an information reporting method according to an example embodiment.
FIG. 12 is a flowchart of an information reporting method according to an example embodiment.
FIG. 13 is a block diagram of an information reporting device according to an example embodiment.
FIG. 14 is a block diagram of an information reporting device according to an example embodiment.
FIG. 15 is a block diagram of an information reporting device according to an example embodiment.
FIG. 16 is a block diagram of an information reporting device according to an example embodiment.

### DETAILED DESCRIPTION

Here, example embodiments will be described in detail, and examples thereof are shown in the accompanying drawings. When the following description refers to the drawings, unless otherwise indicated, the same numbers in different drawings represent the same or similar elements. The embodiments described in the following example embodiments do not represent all embodiments consistent with the present disclosure. Instead, they are only examples of devices and methods consistent with some aspects of the present disclosure as detailed in the attached claims.

It should be noted that all actions to obtain signals, information or data in the present disclosure are carried out in accordance with the relevant data protection regulations and policies of the country of residence and with the authorization given by the owner of the corresponding device.

In the description of the present disclosure, the terms used, such as "first", "second", etc., are used to distinguish similar objects, and do not have to be understood as a specific order or sequence. In addition, in the description of the reference drawings, the same mark in different drawings represents the same element unless otherwise stated.

In the description of the present disclosure, unless otherwise specified, "multiple" means two or more than two, and other quantifiers are similar; "at least one item", "one item or more items" or similar expressions refer to any combination of these items, including any combination of single items or plural items. For example, at least one item can represent any number; for another example, one item or more items of a, b and c can represent: a, b, c, a-b, a-c, b-c, or a-b-c, where a, b, c can be single or multiple; "and/or" is a kind of association relationship that describes the associated objects, indicating that there can be three relationships. For example, A and/or B can represent: A exists alone, A and B exist at the same time, and B exists alone, where A and B can be singular or plural.

In the embodiments of the present disclosure, although the operations or steps are described in a specific order in the drawings, it should not be understood that it is required to perform these operations or steps in the specific order shown or in a serial order, or to perform all the operations or steps shown to obtain the desired results. In the embodiments of the present disclosure, these operations or steps can be performed in series; these operations or steps can also be performed in parallel; or some of these operations or steps can be performed.

MR-DC (Multi-Radio Dual Connectivity) can be understood as connecting two networks at the same time. For example, for a UE (user equipment) supporting MR-DC, it can be configured to utilize resources provided by two wireless units connected through a non-ideal backhaul, and the wireless units can be called nodes. One of the nodes provides NR (New Radio) access, and the other node provides E-UTRA or NR access. One of the nodes is used as an MN (Master Node) and the other node is used as a SN (Secondary Node). MN and SN are connected through a network port, and at least MN is connected to CN (Core Network). MR-DC can achieve comprehensive network coverage and improve the utilization of wireless resources of the entire network.

In the relevant technology of the terminal device supporting dual connectivity, when the terminal device is respectively connected to one node as a master node and the other node as a secondary node, since there is a node that cannot decode the relevant report of another node that uses another RAT (radio access technology), if any one of the two nodes changes and the relevant report of the other node is not reported immediately, it will cause a certain node to be unable to decode the relevant report and thus unable to send the relevant report to the correct other node, thereby making it impossible to optimize the network quality of the terminal device.

Therefore, the embodiments of the present disclosure provide an information reporting method, and the present disclosure is explained in conjunction with the accompanying drawings.

The implementation environment of the embodiments of the present disclosure is first introduced below.

The embodiments of the present disclosure can be applied to a 4G (fourth generation mobile communication system) evolution system, such as a long term evolution (LTE) system, or a 5G (fifth generation mobile communication system) system, such as an access network using a new radio access technology (New RAT); a cloud radio access network (CRAN) and other communication systems.

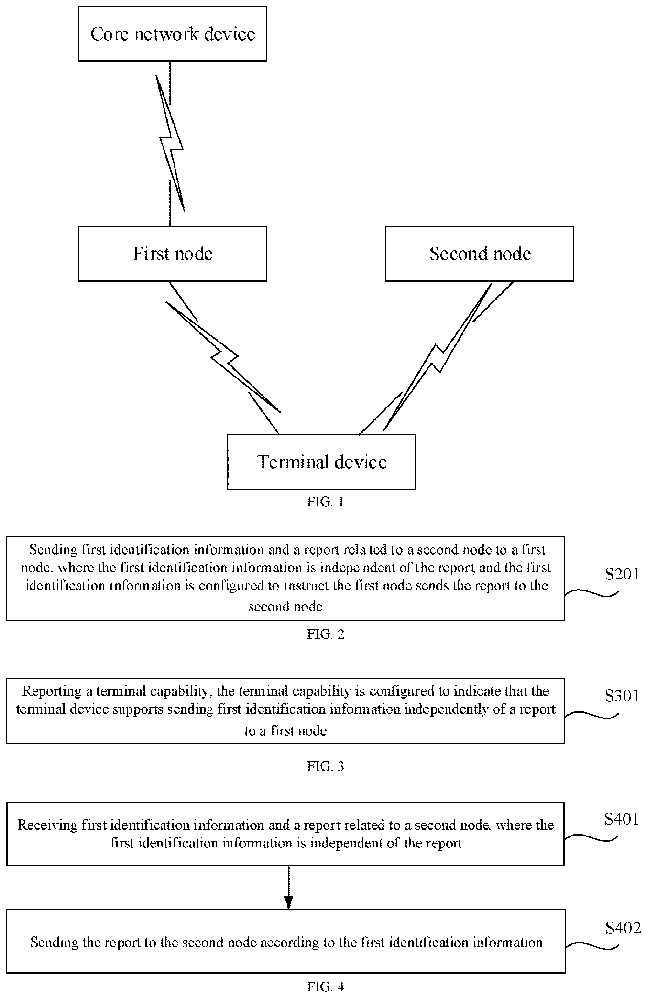

FIG. 1 is a schematic diagram of an architecture of a communication system according to an example embodiment. It should be understood that the embodiment of the present disclosure is not limited to the system shown in FIG. 1. As shown in FIG. 1, the system architecture provided by the embodiments of the present disclosure includes a terminal device, a first access network device, a second access network device, and a core network device. The first access network device and the second access network device may include a base station, which may be used as a specific implementation form of an access network (AN). The first access network device and the second access network device may also be referred to as access nodes. The first node represents the first access network device and the second node represents the second access network device for further explanation. For a terminal device supporting MR-DC, the terminal device is connected to the first node and the second node at the same time, and the terminal device may be configured to utilize the resources provided by the first node and the second node connected via a non-ideal backhaul. As an example, the first node in FIG. 1 may be used as an MN, and the second node in FIG. 1 may be used as an SN, and at least the first node is connected to the core network device. The MN may provide a control plane connection with the core network device, and the SN may provide additional wireless resources to the terminal device.

It is worth noting that in MR-DC, a group of service cells associated with MN can be called a master cell group (MCG). MCG can include a Pcell (primary cell in the master cell group) and one or more optional Scells (secondary cells in the master cell group). In MR-DC, a group of service cells associated with SN can be called a secondary cell group (SCG). SCG can include a PSCell (primary and secondary cells in the secondary cell group) and one or more optional Scells (secondary cells in the secondary cell group).

The first node or the second node may be a base station in a global system for mobile communication (GSM) system or a code division multiple access (CDMA) system, or a base station (NodeB) in a wideband code division multiple access (WCDMA) system, or an evolutionary node B (eNB or eNodeB) in an LTE system, or a base station device, a small base station device, a wireless access node (WiFiAP), a wireless interoperability for microwave access base station (WiMAX BS) in a 5G network, etc., and the present disclosure does not limit this.

The terminal device may also be referred to as an access terminal, user equipment (UE), a user unit, a user station, a mobile, a mobile station, a remote station, a remote terminal, a mobile device, a user terminal, a wireless communication device, a user agent or a user device, etc. The terminal device may be a cellular phone, a cordless phone, a session initiation protocol (SIP) phone, a wireless local loop (WLL) station, a personal digital assistant (PDA), a handheld device with wireless communication function, a computing device or other processing device connected to a wireless modem, a vehicle-mounted device, a wearable device, an IoT terminal device, such as a fire detection sensor, a smart water meter/electricity meter, a factory monitoring device, etc.

The core network device may include a mobility management network element, and the mobility management network element may include an access and mobility management function (AMF) in 5G. The mobility management network element is responsible for the access and mobility management of terminal devices in the mobile network. AMF is responsible for terminal access and mobility management, NAS message routing, session management function (SMF) selection, etc. AMF can be used as an intermediate network element to transmit session management messages between terminal devices and SMF.

The core network device may also include a data management network element for processing terminal device identification, access authentication, registration, and mobility management, etc. In a 5G communication system, the data management network element may be a unified data management (UDM) network element.

Based on the architecture of the above communication system, the terminal device may send a report to the second node through the first node, so that the second node optimizes the network quality of the terminal device based on the report, that is, the second node provides the terminal device with wireless resources with higher network quality for use.

FIG. 2 is a flowchart of an information reporting method according to an example embodiment. The method may be executed by a terminal device, such as a terminal device supporting multi-radio dual connectivity in FIG. 1 above. As shown in FIG. 2, the method may include:
Step S201, sending first identification information and a report related to a second node to a first node, where the first identification information is independent of the report, and the first identification information is configured to instruct the first node sends the report to the second node.

The report related to the second node may be measured by the terminal device.

The first identification information and the report related to the second node may be sent non-simultaneously, and the first identification information and the report related to the second node may also be sent simultaneously, which is not limited in this embodiment.

In the above technical solution, since the first identification information is sent independently of the report, for the first node, the first node can send the report to the second node based on the first identification information without decoding the report, thereby avoiding the situation where the first node or the second node changes and the relevant report is not reported immediately, and the first node cannot decode the relevant report and thus cannot send the relevant report to the correct second node, and achieving the purpose of optimizing the network quality of the terminal device based on the report.

In some embodiments, MR-DC may include at least one of the following: NGEN-DC, EN-DC, NE-DC, and NR-DC.

As an example, NGEN-DC refers to a terminal device connecting to an ng-eNB as an MN and to a gNB as an SN.

As an example, EN-DC refers to a terminal device connecting to an eNB as an MN and to an en-gNB as an SN.

As an example, NE-DC refers to a terminal device connecting to a gNB as an MN and to an ng-eNB as an SN.

As an example, NR-DC refers to a terminal device connecting to a gNB as an MN and to a gNB as an SN, where NR-DC can also be used when the terminal device is connected to a single gNB, the gNB can be used as both an MN and an SN, and MCG and SCG can be configured at the same time.

In some embodiments, the first identification information may include at least one of the following: identification information of the second node, identification information of at least one first cell associated with the second node, identification information of a third node connected to the second node, and identification information of at least one second cell associated with the third node.

In some embodiments, in a case where the first identification information includes identification information of the second node, the first node sends a report to the second node according to the identification information of the second node.

In some embodiments, in a case where the first identification information includes identification information of at least one first cell associated with the second node, the first node sends a report to the second node according to the identification information of at least one first cell.

Among them, at least one first cell is a cell corresponding to the second identification information carried in the report. It should be understood that in the related art, the node to which the report is sent is determined by decoding the identification information carried in the report, and the identification information carried in the report here is, for example, the second identification information in this embodiment. Therefore, when the first identification information is the identification information of the first cell, the first cell may be the cell corresponding to the identification information in the report, that is, the first identification information may be one or more of the identification information carried in the report.

Among them, at least one first cell may include at least one of the following: a primary and secondary cell in a secondary cell group, a primary cell in a master cell group, a secondary cell in a secondary cell group, and a secondary cell in a master cell group.

Among them, at least one second cell may include at least one of the following: a primary and secondary cell in a secondary cell group, a primary cell in a master cell group, a secondary cell in a secondary cell group, and a secondary cell in a master cell group.

In some embodiments, in a case where the first identification information is the identification information of a third node connected to the second node, the first node determines the third node according to the identification information of the third node. Since the second node is connected to the third node, the second node may be determined according to the third node, and the first node further sends the report to the second node.

As an example, the third node may be a node that forms dual connectivity with the second node. The second node may be a secondary node, the third node may be a master node, or the second node may be a master node, and the third node may be a secondary node. The report is sent directly through the first node to the second node determined based on the third node, or the first node sends the report to the third node, and then the third node sends the report to the second node.

It is worth noting that forming dual connectivity here means that both the second node and the third node can be connected to a same terminal device, and the second node and the third node here are directly connected by an interface, and the same terminal device here can be different from the terminal device sending the first identification information. In addition, the second node here can be used as the secondary node of the terminal device, and the third node can be used as the master node of the terminal device; or the second node here can be used as the master node of the terminal device, and the third node can be used as the secondary node of the terminal device.

As another example, there is no direct interface connection between the first node and the second node forming the dual connectivity, and the third node is required as a node for forwarding the report. Therefore, the first node sends the report to the third node, and the third node forwards the report to the second node determined based on the third node.

In some embodiments, in a case where the first identification information is the identification information of at least one second cell associated with the third node, the first node determines the third node based on the identification information of at least one second cell, the first node determines the second node based on the third node, and the first node further sends a report to the second node determined based on the third node, or the first node sends a report to the third node, and the third node determines the second node and sends the report to the second node.

In some embodiments, the report may include at least one of the following: a first report and a second report. The first report includes reports of all cells associated with the second node.

As an example, the first report may be an available report in the reports of all cells associated with the second node, and the report of the cell that exists in the first report and is associated with the second node may be referred to as an available report.

When the first identification information is the identification information of the first cell or the second cell, the report associated with the first identification information may include a report corresponding to the first cell.

As an example, step S201 shown in FIG. 2 may be implemented in the following manner: the terminal device may send the identification information of the first cell and the report corresponding to the first cell to the first node, and the first node may send the report corresponding to the first cell to the second node based on the identification information of the first cell.

As another example, step S201 shown in FIG. 2 may be implemented in the following manner: the terminal device may send the identification information of the second cell and the report corresponding to the first cell to the first node, and the first node may send the report corresponding to the first cell to the second node based on the identification information of the second cell.

In some embodiments, the first node may be a secondary node (SN), and correspondingly, the second node may be a master node (MN).

In some embodiments, the first node may be a master node (MN), and correspondingly, the second node may be a secondary node (SN).

In some embodiments, the first node and the second node use different wireless access technologies.

In some embodiments, the report may include at least one of the following: a radio link failure report, a random access report, a record minimization of driving test report, a handover success report, a connection establishment failure report, and a mobility record report.

Following the above example, the first report may include reports of all cells associated with the second node, and further, the reports of all cells associated with the second node may include at least one of the following: a radio link failure report, a random access report, a record minimization of driving test report, a handover success report, a connection establishment failure report, and a mobility record report.

Following the above example, the second report may include a report associated with the first identification information, and further, the report associated with the first identification information may include at least one of the following: a radio link failure report, a random access report, a record minimization of driving test report, a handover success report, a connection establishment failure report, and a mobility record report. FIG. 3 is a flowchart of an information reporting method shown according to an example embodiment. The method may be executed by a terminal device, such as a terminal device supporting multi-radio dual connectivity in FIG. 1 above. As shown in FIG. 3, the method may include:

Step S301, reporting a terminal capability, the terminal capability is configured to indicate that the terminal device supports sending first identification information independently of a report to a first node.

As an example, the terminal device may directly report the terminal capability to the first node.

In the above technical solution, by reporting the terminal capability to the first node, the first node is aware that the terminal device can support sending the first identification information independently of the report to the first node, so that when the first node receives the first identification information, it can directly send the report to the second node based on the first identification information.

FIG. 4 is a flowchart of an information reporting method shown according to an example embodiment. The method may be executed by a first node, such as the first node in FIG. 1 above. As shown in FIG. 4, the method may include:
Step S401, receiving first identification information and a report related to a second node, where the first identification information is independent of the report.
Step S402, sending the report to the second node according to the first identification information.

The first node may directly receive the first identification information and the report related to the second node sent by a terminal device supporting MR-DC.

The report related to the second node may be measured by the terminal device.

The first identification information and the report related to the second node may be sent non-simultaneously by the terminal device, and the first identification information and the report related to the second node may also be sent simultaneously by the terminal device, which is not limited in this embodiment.

In the above technical solution, since the first identification information is sent independently of the report, for the first node, the first node does not need to decode the report and can send the report to the second node based on the first identification information, thereby avoiding the situation where the first node cannot decode the relevant report and thus cannot send the relevant report to the correct second node when the first node or the second node changes and the relevant report is not reported immediately, and can achieve the purpose of optimizing the network quality of the terminal device based on the report.

In some embodiments, MR-DC may include at least one of the following: NGEN-DC, EN-DC, NE-DC, and NR-DC.

As an example, NGEN-DC refers to a terminal device connecting to an ng-eNB as an MN and to a gNB as an SN.

As an example, EN-DC refers to a terminal device connecting to an eNB as an MN and to an en-gNB as an SN.

As an example, NE-DC refers to a terminal device connecting to a gNB as an MN and to an ng-eNB as an SN.

As an example, NR-DC refers to a terminal device connecting to a gNB as an MN and to a gNB as an SN, where NR-DC may also be used when a terminal device is connected to a single gNB, the gNB may be used as both an MN and an SN, and MCG and SCG may be configured at the same time.

In some embodiments, the first identification information may include at least one of the following: identification information of a second node, identification information of at least one first cell associated with the second node, identification information of a third node connected to the second node, and identification information of at least one second cell associated with the third node.

In some embodiments, when the first identification information includes the identification information of the second node, the first node sends the report to the second node according to the identification information of the second node.

In some embodiments, when the first identification information includes the identification information of at least one first cell associated with the second node, the first node sends the report to the second node according to the identification information of at least one first cell.

At least one first cell is a cell corresponding to second identification information carried in the report, where the second identification information is configured to indicate the corresponding cell, and the first node sends the report to the second node according to at least one second identification information.

At least one first cell may include at least one of the following: a primary and secondary cell in a secondary cell group, a primary cell in a master cell group, a secondary cell in a secondary cell group, and a secondary cell in a master cell group.

At least one second cell may include at least one of the following: a primary and secondary cell in a secondary cell group, a primary cell in a master cell group, a secondary cell in a secondary cell group, and a secondary cell in a master cell group.

In some embodiments, when the first identification information is the identification information of a third node connected to the second node, the first node determines the third node according to the identification information of the third node, and since the second node is connected to the third node, the second node may be determined according to the third node, and the first node further sends the report to the second node.

As an example, the third node may be a node that forms a dual connectivity with the second node, and the second node may serve as a secondary node and the third node may serve as a master node, or the second node may serve as a master node and the third node may serve as a secondary node. The report is sent directly through the first node to the second node determined based on the third node, or the first node sends the report to the third node, and the third node then sends the report to the second node.

It is worth noting that forming a dual connectivity here means that both the second node and the third node can be connected to a same terminal device, and the second node and the third node here are directly interfaced, and the same terminal device here may be different from the terminal device that sends the first identification information. In addition, the second node here may serve as a secondary node of the terminal device, and correspondingly, the third node serves as a master node of the terminal device; or the second node here may serve as a master node of the terminal device, and correspondingly, the third node serves as a secondary node of the terminal device.

As another example, there is no direct interface connection between the first node and the second node that form a dual connectivity, and the third node is required to be a node that forwards the report. Therefore, the first node sends the report to the third node, and the third node then forwards the report to the second node determined based on the third node.

In some embodiments, in a case where the first identification information is the identification information of at least one second cell associated with the third node, the first node determines the third node based on the identification information of at least one second cell, the first node determines the second node based on the third node, and the first node further sends a report to the second node determined based on the third node, or the first node sends a report to the third node, and the third node determines the second node and sends the report to the second node.

In some embodiments, the report may include at least one of the following: a first report and a second report.

The first report includes reports of all cells associated with the second node.

As an example, the first report may include an available report in the reports of all cells associated with the second node, and the report of the cell that exist in the first report and is associated with the second node may be referred to as an available report.

When the first identification information is the identification information of the first cell or the second cell, the report associated with the first identification information may include a report corresponding to the first cell.

As an example, the terminal device may send the identification information of the first cell and the report corresponding to the first cell to the first node, and the first node sends the report corresponding to the first cell to the second node based on the identification information of the first cell.

As another example, the terminal device may send the identification information of the second cell and the report corresponding to the first cell to the first node, and the first node may send the report corresponding to the first cell to the second node based on the identification information of the second cell.

In some embodiments, the first node may be a secondary node (SN), and correspondingly, the second node may be a master node (MN).

In some embodiments, the first node may be a master node (MN), and correspondingly, the second node may be a secondary node (SN).

In some embodiments, the first node and the second node use different wireless access technologies.

In some embodiments, the report may include at least one of the following: a radio link failure report, a random access report, a record minimization of driving test report, a handover success report, a connection establishment failure report, and a mobility record report.

Following the above example, the first report may include reports of all cells associated with the second node, and further, the reports of all cells associated with the second node may include at least one of the following: a radio link failure report, a random access report, a record minimization of driving test report, a handover success report, a connection establishment failure report, and a mobility record report.

Following the above example, the second report may include a report associated with the first identification information, and further, the report associated with the first identification information may include at least one of the following: a radio link failure report, a random access report, a record minimization of driving test report, a handover success report, a connection establishment failure report, and a mobility record report.

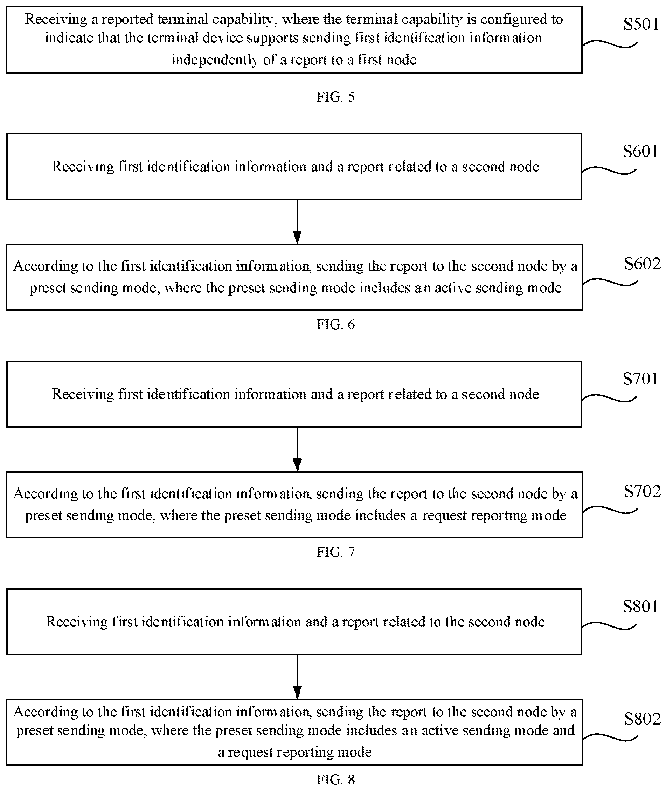

FIG. 5 is a flowchart of an information reporting method shown according to an example embodiment. The method may be performed by a first node, such as the first node in FIG. 1 above. As shown in FIG. 5, the method may include:
Step S501, receiving a reported terminal capability, where the terminal capability is configured to indicate that the terminal device supports sending first identification information independently of a report to a first node.

As an example, the terminal device may directly report the terminal capability to the first node.

In the above technical solution, the first node receives the terminal capability reported by the terminal device, so that the first node knows that the terminal device can support sending the first identification information independently of the report to the first node. Thus, when the first node receives the first identification information, it can directly send the report to the second node based on the first identification information.

FIG. 6 is a flowchart of an information reporting method shown according to an example embodiment. The method may be performed by a first node, such as the first node in FIG. 1 above. As shown in FIG. 6, the method may include:
Step S601, receiving first identification information and a report related to a second node.

The implementation process of step S601 may refer to the above-mentioned relevant embodiments, which will not be repeated in this embodiment.

Step S602, according to the first identification information, sending the report to the second node by a preset sending mode, where the preset sending mode includes an active sending mode.

As an example, step S602 can be implemented in the following manner: if a report request is not received within a preset time period, the report is sent to the second node according to the first identification information. The report request may be sent by the second node, and the report request is used for the second node to request a report from the first node.

The preset time period may be specified by the network protocol or configured by the first node, and the present disclosure does not limit this.

In the above technical solution, the first node sends the report to the second node in an active sending mode based on the first identification, so that the second node can reduce the delay of receiving the report.

FIG. 7 is a flowchart of an information reporting method according to an example embodiment. The method can be executed by a first node, such as the first node in FIG. 1 above. As shown in FIG. 7, the method may include:
Step S701, receiving first identification information and a report related to a second node.

The implementation process of step S701 may refer to the above-mentioned relevant embodiments, which will not be repeated in this embodiment.

Step S702, according to the first identification information, sending the report to the second node by a preset sending mode, where the preset sending mode includes a request reporting mode.

The request reporting here may refer to the first node actively sending a request information for requesting to report a report to the second node. In a case where the second node agrees to report the report, the first node sends the report to the second node.

In the above technical solution, when considering certain special cases, the report can be sent based on the request information for requesting to report sent by the first node. Some special cases are, for example, situations where the network protocol setting requires the second node to agree to report the report.

FIG. 8 is a flowchart of an information reporting method according to an example embodiment. The method can be executed by a first node, such as the first node in FIG. 1 above. As shown in FIG. 8, the method may include:
Step S801, receiving first identification information and a report related to the second node.
Step S802, according to the first identification information, sending the report to the second node by a preset sending mode, where the preset sending mode includes an active sending mode and a request reporting mode.

The implementation process of step S801 and step S802 can refer to the above-mentioned relevant embodiments, which will not be repeated in this embodiment.

In some embodiments, the first node can achieve the purpose of sending the report to the second node according to the first identification information by directly sending the report itself.

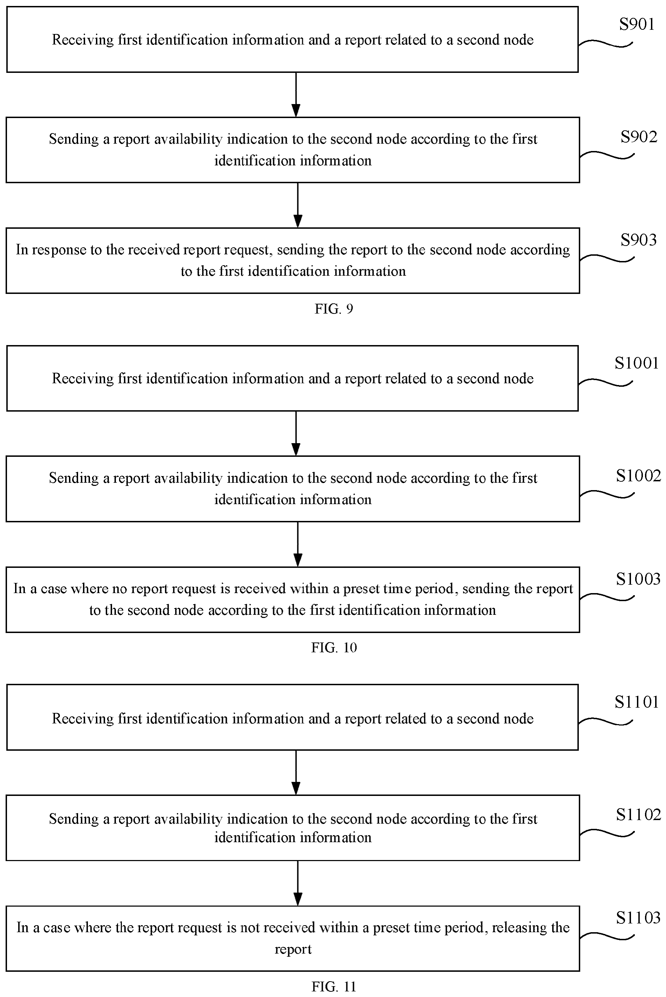

FIG. 9 is a flowchart of an information reporting method according to an example embodiment. The method can be executed by a first node, such as the first node in FIG. 1 above. As shown in FIG. 9, the method may include:
Step S901, receiving first identification information and a report related to a second node.

The implementation process of step S901 can refer to the above-mentioned relevant embodiments, which will not be repeated in this embodiment.

Step S902, sending a report availability indication to the second node according to the first identification information.

The report availability indication is configured to notify the second node that the first node has the report.

Step S903, in response to the received report request, sending the report to the second node according to the first identification information.

After the second node receives the report availability indication, according to whether it is necessary to optimize the quality of the resources used by the terminal device, and in a case of needing to optimize the quality of the resources used by the terminal device, the second node can actively send a report request to the first node to request the first node to send a report to the second node.

In this way, the second node can achieve the purpose of optimizing the quality of the resources used by the terminal device.

FIG. 10 is a flowchart of an information reporting method according to an example embodiment. The method may be executed by a first node, such as the first node in FIG. 1. As shown in FIG. 10, the method may include:
Step S1001, receiving first identification information and a report related to a second node.

The implementation process of step S1001 may refer to the above-mentioned related embodiments, which will not be repeated in this embodiment.

Step S1002, sending a report availability indication to the second node according to the first identification information.

The implementation process of step S1002 may refer to the above-mentioned related embodiments, which will not be repeated in this embodiment.

Step S1003, in a case where no report request is received within a preset time period, sending the report to the second node according to the first identification information.

The preset time period may be specified by a network protocol or configured by the first node, and this disclosure does not limit this.

The explanation of the report request may refer to the above-mentioned related embodiments, which will not be repeated in this embodiment.

It is worth noting that the second node may not be able to actively send a report request after receiving the report availability indication. Therefore, in order to achieve the purpose of optimizing the quality of resources used by the terminal device, if the report request is not received within a preset time period, the first node actively sends the report to the second node according to the first identification information, thereby providing a basis for the second node to optimize the network quality of the terminal device based on the report.

FIG. 11 is a flowchart of an information reporting method according to an example embodiment. The method can be performed by a first node, such as the first node in FIG. 1 above. As shown in FIG. 11, the method may include:
Step S1101, receiving first identification information and a report related to a second node.

The implementation process of step S1101 can refer to the above-mentioned relevant embodiments, which will not be repeated in this embodiment.

Step S1102, sending a report availability indication to the second node according to the first identification information.

The implementation process of step S1102 can refer to the above-mentioned relevant embodiments, which will not be repeated in this embodiment.

Step S1103, in a case where the report request is not received within a preset time period, releasing the report.

The explanation of the report request can refer to the above-mentioned relevant embodiments, which will not be repeated in this embodiment.

The preset time period can be specified by the network protocol or configured by the first node, and this disclosure does not limit this.

Since the second node has not sent a report request to the first node for a long time, it can be characterized that there is no need to optimize the quality of resources used by the terminal device, so that the first node releases the report when it does not receive a report request within the preset time period, thereby reducing the resource occupation of the first node.

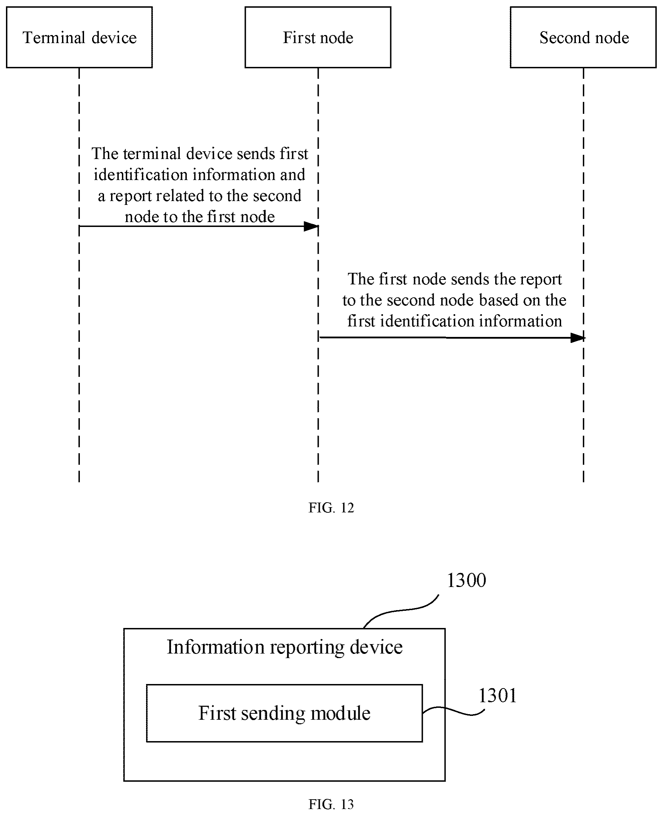

FIG. 12 is a flowchart of an information reporting method according to an example embodiment, which is applied to the system shown in FIG. 1. The terminal device sends first identification information and a report related to a second node to a first node; and the first node sends a report to the second node based on the first identification information.

The first identification information is independent of the report.

The implementation method of the steps shown in FIG. 12 can refer to the above-mentioned relevant embodiments, which will not be repeated in this embodiment.

In some embodiments, in a dual connectivity scenario, the terminal device carries the SN-related identification information outside the SN-related report and sends it to the MN, and the SN-related identification information is used for the MN to send the SN-related report to the SN. Among them, the MN and the SN use different RATs. The SN in this embodiment is, for example, the second node mentioned above, the MN in this embodiment is, for example, the first node mentioned above, the SN-related identification information in this embodiment may be, for example, the first identification information mentioned above, and the SN-related report in this embodiment may be, for example, the report mentioned above.

In some embodiments, the terminal device carries the SN identification information outside the SN-related report and sends it to the MN, the SN-related report includes the available reports of all cells associated with the SN, and the SN identification information is used for the MN to send the SN-related report to the SN. The SN in this embodiment is, for example, the second node mentioned above, the MN in this embodiment is, for example, the first node mentioned above, the SN identification information in this embodiment may be, for example, the identification information of the second node mentioned above, and the SN-related report in this embodiment may be, for example, the first report mentioned above.

In some embodiments, the terminal device carries one or more cell identification information associated with the SN outside the SN-related report and sends it to the MN, the SN-related report includes the available reports of all cells associated with the SN, and the one or more cell identification information associated with the SN is used for the MN to send the SN-related report to the SN. The SN in this embodiment is, for example, the second node mentioned above, the MN in this embodiment is, for example, the first node mentioned above, the one or more cell identification information associated with the SN in this embodiment is, for example, the identification information of at least one first cell mentioned above, and the available reports of all cells associated with the SN in this embodiment are, for example, the first report mentioned above.

In some embodiments, the terminal device carries one or more cell identification information associated with the SN outside the independent report corresponding to the one or more cell identification information and sends it to the MN. The one or more cell identification information associated with the SN is used by the MN to send the corresponding independent report to the corresponding SN. The SN in this embodiment is, for example, the second node mentioned above, the MN in this embodiment is, for example, the first node mentioned above, and the one or more cell identification information associated with the SN in this embodiment is, for example, the identification information of at least one first cell mentioned above. Correspondingly, when the cell identification information is the identification information of cell 1, the independent report corresponding to the cell identification information is, for example, the report corresponding to cell 1.

In some embodiments, 1. in the dual connectivity (MR-DC) scenario, the terminal device carries the first identification information outside the report and sends it to the first node. The first identification information is used by the first node to send the report to the second node. The report here is, for example, a report related to the second node.

2. Based on 1, in some embodiments, the first identification information may be at least one of the following:
a) identification information of the second node;
b) identification information of one or more third cells associated with the second node, the identification information of one or more third cells is the identification information included in the report, and the third cell here is for example the first cell mentioned above;
c) identification information of the third node dual-connected with the second node;
d) identification information of one or more fourth cells associated with the third node dual-connected with the second node, and the fourth cell here is for example the second cell mentioned above.

In some embodiments, the terminal device carries the identification information of the third node dual-connected with the second node, and the first node determines the third node according to the identification information of the third node, and then determines the second node, and sends the report to the second node.

In some embodiments, the terminal device carries identification information of one or more fourth cells associated with the third node dual-connected with the second node, and the first node determines the third node according to identification information of one or more fourth cells associated with the third node dual-connected with the second node, and then determines the second node, and sends the report to the second node.

Based on 2a), in some embodiments, in a dual connectivity scenario, the terminal device carries the identification information of the second node outside the first report and sends it to the first node, and the identification information of the second node is used by the first node to send the second node related report to the second node. In this embodiment, the second node is, for example, SN, and SN is, for example, gNB; the first report is, for example, SN RACH report; the first node is, for example, MN, and MN is, for example, eNB.

Based on 2b), in some embodiments, in a dual connectivity scenario, the terminal device carries the identification information of one or more third cells associated with the second node outside the first report and sends it to the first node, and the identification information of one or more third cells is used by the first node to send the first report to the second node. One or more third cell identification information is the identification information in the first report. In this embodiment, the third cell is, for example, the first cell mentioned above, and the third cell is, for example, PScell; the second node report is, for example, SN RACH report; the first node is, for example, MN, and MN is, for example, eNB.

In some other embodiments, in a dual connectivity scenario, the terminal device carries the identification information of one or more third cells associated with the second node outside the available report related to the third cell and sends it to the first node. The one or more third cell identification information is used by the first node to send the available report related to the third cell to the second node. The one or more third cell identification information is the identification information in the available report related to the third cell. In this embodiment, the third cell is, for example, the first cell mentioned above, and the third cell is, for example, a PScell; the available report related to the third cell is, for example, a report corresponding to the third cell, and the report corresponding to the third cell is, for example, an SN RACH report.

Based on 2c), in some embodiments, in a dual connectivity scenario, the terminal device carries the identification information of the third node dually connected with the second node outside the first report and sends it to the first node. The first node determines the third node according to the identification information of the third node, and then determines the second node, and sends the first report to the second node. In this embodiment, the second node is, for example, a gNB, and the third node is, for example, an eNB.

Based on 2d), in some embodiments, in a dual connectivity scenario, the terminal device carries the identification information of one or more fourth cells associated with the third node dual-connected to the second node outside the first report and sends it to the first node. The first node determines the third node based on the identification information of one or more fourth cells associated with the third node dual-connected to the second node, and then determines the second node, and sends the first report to the second node. In this embodiment, the fourth cell is, for example, the second cell mentioned above.
3. Based on 2, the report includes at least one of the following:
   a) First report, the second node report includes available reports of all cells associated with the second node;
   b) Second report, available reports associated with the second node associated with the identification information, where the identification information is, for example, the first identification information mentioned above, and the available reports associated with the second node here are, for example, reports corresponding to the first cells that exist in the report and are associated with the second node.
4. Based on 1, the dual-connectivity scenario includes at least one of the following:
   a) NGEN-DC;
   b) EN-DC;
   c) NE-DC.
5. Based on 1, the first node and the second node can be:
   a) the first node is a master node and the second node is a secondary node;
   b) the first node is a secondary node and the second node is a master node.
6. Based on 1, the first node and the second node use different RATs.
7. Based on any one of 1 to 6, the identification information of the cell includes at least one of the following, and the identification information of the cell is one or more of the identification information of the cell in the report, such as the first cell or the second cell mentioned above:
   a) PScell identification information;
   b) Scell identification information;
   c) Pcell identification information.
8. Based on 1, sending the report related to the second node to the second node includes sending it in an active sending mode and/or a request reporting mode. For the implementation of sending in an active sending mode and/or a request reporting mode, please refer to the above-mentioned related embodiments.
9. Based on 1, the first node sending a report related to the second node includes:
   a) directly sending the report itself;
   b) sending a report availability indication, and further, in response to receiving a report request, the first node sends the report to the second node according to the first identification information.
10. Based on 1, the first node receives a report related to the second node, and the first node sends the report to the second node according to the first identification information.
11. Based on 1, the first node receives a report related to the second node. In response to receiving the report request, the first node sends the report to the second node according to the first identification information.
12. Based on 1, within a preset time period, if the first node does not receive the report request, the first node actively triggers the report to be sent to the second node.
13. Based on 1, within a preset time period, if the first node does not receive the report request, the report is released.
14. Based on 1, the report related to the second node includes but is not limited to the SN RACH report.
15. Based on 1, the terminal device can report a terminal capability. The terminal capability is configured to indicate that the terminal device supports carrying the first identification information outside the report related to the second node and sending it to the first node, and the first identification information is used for the first node to send the report to the second node. FIG. 13 is a block diagram of an information reporting device according to an example embodiment, which is applied to a terminal device in a dual-connectivity scenario. The device 1300 includes:
   a first sending module 1301 configured to send first identification information and a report related to a second node to a first node, where the first identification information is independent of the report, and the first identification information is configured to instruct the first node to send the report to the second node.

In some embodiments, the first identification information includes at least one of the following:
identification information of the second node;
identification information of at least one first cell associated with the second node, where the at least one first cell is a cell corresponding to the second identification information carried in the report;
identification information of a third node connected to the second node;
identification information of at least one second cell associated with the third node.

In some embodiments, the report includes at least one of the following:
a first report, where the first report includes reports of all cells associated with the second node;
a second report, where the second report includes a report associated with the first identification information.

In some embodiments, the first node is a master node, and the corresponding second node is a secondary node.

Alternatively, the first node is a secondary node, and the corresponding second node is a master node.

In some embodiments, the first node and the second node use different wireless access technologies.

In some embodiments, the at least one first cell includes at least one of the following:
a primary and secondary cell in a secondary cell group;
a primary cell in a master cell group;
a secondary cell in the secondary cell group;
a secondary cell in the master cell group.

In some embodiments, the report includes at least one of the following:
a radio link failure report;
a random access report;
a record minimization of driving test report;
a handover success report;
a connection establishment failure report;
a mobility record report.

In some embodiments, the device 1300 further includes:
a reporting module configured to report a terminal capability, the terminal capabilities being configured to indicate that the terminal device supports sending the first identification information to the first node independently of the report.

The implementation of each module in the above device can refer to the above related embodiments, which will not be repeated in this embodiment.

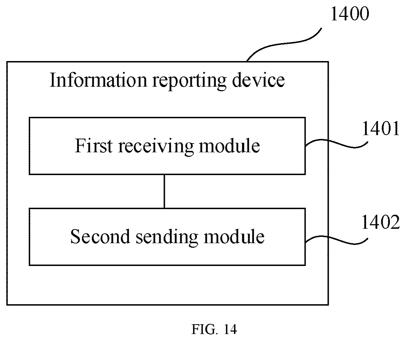

FIG. 14 is a block diagram of an information reporting device according to an example embodiment, applied to a first node, and the device 1400 includes:
a first receiving module 1401 configured to receive first identification information and a report related to a second node, where the first identification information is independent of the report;
a second sending module 1402 configured to send the report to the second node according to the first identification information.

In some embodiments, the first identification information includes at least one of the following:
identification information of the second node;
identification information of at least one first cell associated with the second node, where the at least one first cell is a cell corresponding to the second identification information carried in the report;
identification information of a third node connected to the second node;
identification information of at least one second cell associated with the third node.

In some embodiments, the report includes at least one of the following:
a first report, where the first report includes reports of all cells associated with the second node;
a second report, where the second report includes a report associated with the first identification information.

In some embodiments, the first node is a master node, and correspondingly, the second node is a secondary node.

Alternatively, the first node is a secondary node, and correspondingly, the second node is a master node.

In some embodiments, the first node and the second node use different wireless access technologies.

In some embodiments, the at least one first cell includes at least one of the following:
a primary and secondary cell in a secondary cell group;
a primary cell in a master cell group;
a secondary cell in the secondary cell group;
a secondary cell in the master cell group.

In some embodiments, the report includes at least one of the following:
a radio link failure report;
a random access report;
a record minimization of driving test report;
a handover success report;
a connection establishment failure report;
a mobility record report.

In some embodiments, the device 1400 further includes:
a second receiving module configured to receive a reported terminal capability, the terminal capability is configured to indicate that the terminal device supports sending the first identification information independently of the report to the first node.

In some embodiments, the second sending module 1402 includes:
a first sending submodule configured to send the report to the second node in a preset sending mode according to the first identification information, the preset sending mode including an active sending mode and/or a request reporting mode.

In some embodiments, the second sending module 1402 includes:
a second sending submodule, configured to send a report availability indication to the second node according to the first identification information, the report availability indication is configured to notify the second node that the first node has the report;
a third sending submodule, configured to send the report to the second node according to the first identification information in response to the received report request.

In some embodiments, the second sending module 1402 further includes:
a fourth sending submodule, configured to send the report to the second node according to the first identification information in a case where the report request is not received within a preset time period.

In some embodiments, the second sending module 1402 further includes:
a release submodule, configured to send the report to the second node according to the first identification information in a case where the report request is not received within a preset time period.

The implementation methods of each module in the above device can refer to the above related embodiments, which will not be repeated in this embodiment.

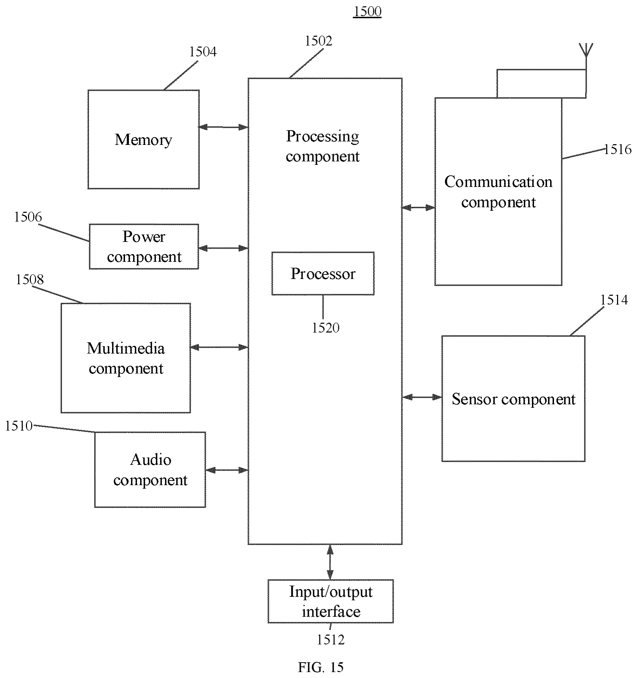

FIG. 15 is a block diagram of an information reporting device shown according to an example embodiment. The information reporting device may be the above-mentioned terminal device, and the information reporting device may be a mobile phone, a computer, a digital broadcast terminal, a message transceiver device, a game console, a tablet device, a medical device, a fitness device, a personal digital assistant, etc.

Referring to FIG. 15, the information reporting device 1500 may include one or more of the following components: a processing component 1502, a memory 1504, a power component 1506, a multimedia component 1508, an audio component 1510, an input/output interface 1512, a sensor component 1514, and a communication component 1516.

The processing component 1502 generally controls the overall operation of the information reporting device 1500, such as operations associated with display, phone calls, data communications, camera operations, and recording operations. The processing component 1502 may include one or more processors 1520 to execute instructions to complete all or part of the steps of the information reporting method. In addition, the processing component 1502 may include one or more modules to facilitate the interaction between the processing component 1502 and other components. For example, the processing component 1502 may include a multimedia module to facilitate the interaction between the multimedia component 1508 and the processing component 1502.

The memory 1504 is configured to store various types of data to support the operation of the information reporting device 1500. Examples of such data include instructions for any application or method operating on the information reporting device 1500, contact data, phone book data, messages, pictures, videos, etc. The memory 1504 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 1506 provides power to various components of the information reporting device 1500. The power component 1506 may include a power management system, one or more power supplies, and other components associated with generating, managing and distributing power for the information reporting device 1500.

The multimedia component 1508 includes a screen that provides an output interface between the information reporting device 1500 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor can not only sense the boundary of the touch or sliding action, but also detect the duration and pressure associated with the touch or sliding operation. In some embodiments, the multimedia component 1508 includes a front camera and/or a rear camera. When the information reporting device 1500 is in an operating mode, such as a shooting mode or a video mode, the front camera and/or the rear camera can receive external multimedia data. Each front camera and rear camera can be a fixed optical lens system or have focal length and optical zoom capabilities.

The audio component 1510 is configured to output and/or input audio signals. For example, the audio component 1510 includes a microphone (MIC), and when the information reporting device 1500 is in an operating mode, such as a call mode, a recording mode, and a voice recognition mode, the microphone is configured to receive an external audio signal. The received audio signal can be further stored in the memory 1504 or sent via the communication component 1516. In some embodiments, the audio component 1510 further includes a speaker for outputting an audio signal.

The input/output interface 1512 provides an interface between the processing component 1502 and the peripheral interface module, which may be a keyboard, a click wheel, a button, etc. These buttons may include, but are not limited to, a home button, a volume button, a start button, and a lock button.

The sensor component 1514 includes one or more sensors for providing various aspects of status evaluation for the information reporting device 1500. For example, the sensor component 1514 can detect the open/closed state of the information reporting device 1500, the relative positioning of components, such as the display and keypad of the device 1500. The sensor component 1514 can also detect the position change of the information reporting device 1500 or a component of the information reporting device 1500, the presence or absence of user contact with the information reporting device 1500, the orientation or acceleration/deceleration of the information reporting device 1500, and the temperature change of the information reporting device 1500. The sensor component 1514 may include a proximity sensor configured to detect the presence of nearby objects without any physical contact. The sensor component 1514 may further include a light sensor, such as a CMOS or CCD image sensor, for use in imaging applications. In some embodiments, the sensor component 1514 may further include an accelerometer, a gyroscope, a magnetic sensor, a pressure sensor, or a temperature sensor.

The communication component 1516 is configured to facilitate wired or wireless communication between the information reporting device 1500 and other devices. The information reporting device 1500 can access a wireless network based on a communication standard, such as WiFi, 2G or 3G, or a combination thereof. In an example embodiment, the communication component 1516 receives a broadcast signal or broadcast-related information from an external broadcast management system via a broadcast channel. In an example embodiment, the communication component 1516 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology, and other technologies.

In an example embodiment, the information reporting device 1500 may be implemented by one or more of an application-specific integrated circuits (ASIC), a digital signal processor (DSP), a digital signal processing device (DSPD), a programmable logic device (PLD), a field programmable gate array (FPGA), a controller, a microcontroller, a microprocessor, or other electronic components to implement the information reporting method.

In an example embodiment, a non-transitory computer-readable storage medium including instructions is also provided, such as a memory 1504 including instructions, and the above instructions may be executed by a processor 1520 of the information reporting device 1500 to complete the information reporting method. For example, the non-transitory computer-readable storage medium may be a ROM, a random access memory (RAM), a CD-ROM, a magnetic tape, a floppy disk, an optical data storage device, etc.

In addition to being an independent user device, the above-mentioned information reporting device 1500 can also be a part of an independent user device. For example, in one embodiment, the device can be an integrated circuit (IC) or a chip, where the integrated circuit can be an IC or a collection of multiple ICs; the chip can include but is not limited to the following types: GPU (Graphics Processing Unit), CPU (Central Processing Unit), FPGA (Field Programmable Gate Array), DSP (Digital Signal Processor), ASIC (Application Specific Integrated Circuit), SOC (System on Chip), etc. The above-mentioned integrated circuit or chip can be configured to execute executable instructions (or codes) to implement the above-mentioned information reporting method. The executable instructions can be stored in the integrated circuit or chip, or can be obtained from other device or apparatus. For example, the integrated circuit or chip includes a processor, a memory, and an interface for communicating with other devices. The executable instruction may be stored in the processor, and the above-mentioned information reporting method may be implemented when the executable instruction is executed by the processor; or, the integrated circuit or chip may receive the executable instruction through the interface and transmit it to the processor for execution to implement the above-mentioned information reporting method.

In another example embodiment, a computer program product is also provided, which includes a computer program that can be executed by a programmable device, and the computer program has a code part for executing the above-mentioned information reporting method when executed by the programmable device.

In another example embodiment, a chip is also provided, including a processor and an interface. The processor is configured to read instructions to execute the above-mentioned information reporting method.

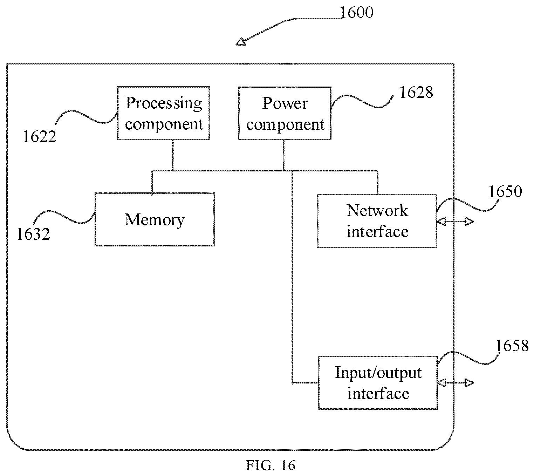

FIG. 16 is a block diagram of an information reporting device according to an example embodiment. The information reporting device 1600 can be the above-mentioned first node or second node. Referring to FIG. 16, the information reporting device 1600 includes a processing component 1622, which further includes one or more processors, and a memory resource represented by a memory 1632, which is configured to store instructions that can be executed by the processing component 1622, such as an application. The application stored in the memory 1632 may include one or more modules each corresponding to a set of instructions. In addition, the processing component 1622 is configured to execute instructions to perform the above-mentioned information reporting method.

The information reporting device 1600 may further include a power component 1628 configured to perform power management of the information reporting device 1600, a wired or wireless network interface 1650 configured to connect the information reporting device 1600 to the network, and an input/output interface 1658.

In an example embodiment, a non-transitory computer-readable storage medium including instructions is also provided, such as a memory 1632 including instructions, and the above-mentioned instructions can be executed by the processing component 1622 of the information reporting device 1600 to complete the above-mentioned information reporting method. For example, the non-transitory computer-readable storage medium can be a ROM, a random access memory (RAM), a CD-ROM, a magnetic tape, a floppy disk, and an optical data storage device, etc.

After considering the specification and practicing the present disclosure, those skilled in the art will easily think of other embodiments of the present disclosure. The present disclosure is intended to cover any variation, use or adaptation of the present disclosure, which follows the general principles of the present disclosure and includes common knowledge or customary technical means in the technical field that are not disclosed in the present disclosure. The description and embodiments are to be regarded as exemplary only, and the true scope and spirit of the present disclosure are indicated by the following claims.

It should be understood that the present disclosure is not limited to the precise structure described above and shown in the accompanying drawings, and various modifications and changes can be made without departing from its scope. The scope of the present disclosure is limited only by the appended claims.

## Claims

1. An information reporting method, performed by a terminal device in a dual-connectivity scenario, comprising:
sending first identification information and a report related to a second node to a first node, wherein the first identification information is independent of the report, and the first identification information is configured to instruct the first node to send the report to the second node.

2. The method according to claim 1, wherein the first identification information comprises at least one of:
identification information of the second node;
identification information of at least one first cell associated with the second node, wherein the at least one first cell is a cell corresponding to second identification information carried in the report;
identification information of a third node connected to the second node; or
identification information of at least one second cell associated with the third node.

3. The method according to claim 1, wherein the report comprises at least one of:
a first report, wherein the first report comprises reports of all cells associated with the second node; or
a second report, wherein the second report comprises a report associated with the first identification information.

4. The method according to claim 1, wherein the first node is a master node, and correspondingly, the second node is a secondary node; or
the first node is a secondary node, and correspondingly, the second node is a master node.

5. The method according to claim 1, the first node and the second node use different wireless access technologies.

6. The method according to claim 2, wherein the at least one first cell comprises at least one of:
a primary and secondary cell in a secondary cell group;
a primary cell in a master cell group;
a secondary cell in the secondary cell group; or
a secondary cell in the master cell group.

7. The method according to claim 1, wherein the report comprises at least one of:
a radio link failure report;
a random access report;
a record minimization of driving test report;
a handover success report;
a connection establishment failure report; or
a mobility record report.

8. The method according to claim 1, further comprising:
reporting a terminal capability, wherein the terminal capability is configured to indicate that the terminal device supports sending the first identification information to the first node independently of the report.

9. An information reporting method, performed by a first node, comprising:
receiving first identification information and a report related to a second node, wherein the first identification information is independent of the report; and
sending the report to the second node based on the first identification information.

10. The method according to claim 9, wherein the first identification information comprises at least one of:
identification information of the second node;
identification information of at least one first cell associated with the second node, wherein the at least one first cell is a cell corresponding to the second identification information carried in the report;
identification information of a third node connected to the second node; or
identification information of at least one second cell associated with the third node.

11. The method according to claim 9, wherein the report comprises at least one of:
a first report, wherein the first report comprises reports of all cells associated with the second node; or
a second report, wherein the second report comprises a report associated with the first identification information.

12. The method according to claim 9, wherein the first node is a master node, and correspondingly, the second node is a secondary node; or
the first node is a secondary node, and correspondingly, the second node is a master node.

13. The method according to claim 9, wherein the first node and the second node use different wireless access technologies.

14. The method according to claim 10, wherein the at least one first cell comprises at least one of:
a primary and secondary cell in a secondary cell group;
a primary cell in a master cell group;
a secondary cell in the secondary cell group; or
a secondary cell in the master cell group.

15. The method according to claim 9, wherein the report comprises at least one of:
a radio link failure report;
a random access report;
a record minimization of driving test report;
a handover success report;
a connection establishment failure report; or
a mobility record report.

16. The method according to claim 9, further comprising:
receiving a reported terminal capability, wherein the terminal capability is configured to indicate that the terminal device supports sending the first identification information to the first node independently of the report.

17. The method according to claim 9, wherein sending the report to the second node based on the first identification information comprises:
sending the report to the second node in a preset sending mode based on the first identification information, wherein the preset sending mode comprises an active sending mode and/or a request reporting mode.

18. The method according to claim 9, wherein sending the report to the second node based on the first identification information comprises:
sending a report availability indication to the second node based on the first identification information, wherein the report availability indication is configured to notify the second node that the first node has the report; and
in response to a received report request, sending the report to the second node based on the first identification information.

19. The method according to claim 18, wherein sending the report to the second node based on the first identification information further comprises:
in a case where the report request is not received within a preset time period, sending the report to the second node based on the first identification information.

20. The method according to claim 18, wherein sending the report to the second node based on the first identification information further comprises:
in a case where the report request is not received within a preset time period, releasing the report.

21. An information reporting device, comprising:
a first sending module, configured to send first identification information and a report related to a second node to a first node, wherein the first identification information is independent of the report, and the first identification information is configured to instruct the first node to send the report to the second node.

22. An information reporting device, comprising:
a first receiving module, configured to receive first identification information and a report related to a second node, wherein the first identification information is independent of the report; and
a second sending module, configured to send the report to the second node based on the first identification information.

23. An information reporting device, comprising:
a processor; and
a memory for storing processor executable instructions;
wherein the processor is configured to execute steps of the method according to any one of claims 1 to 8, or steps of the method according to any one of claims 9 to 20.

24. A computer-readable storage medium with computer program instructions stored thereon, when the computer program instructions are executed by the processor, steps of the method according to any one of claims 1 to 8, or steps of the method according to any one of claims 9 to 20, are implemented.

25. A communication system, comprising:
a terminal device, configured to execute the method according to any one of claims 1 to 8;
a first node, configured to execute the method according to any one of claims 9 to 20; and
a second node.
